Europäisches Patentamt

European Patent Office

Office européen des brevets

(19)

(11) Veröffentlichungsnummer: **0 032 379**
**A2**

(12) # EUROPÄISCHE PATENTANMELDUNG

(21) Anmeldenummer: 81100063.7

(22) Anmeldetag: 08.01.81

(51) Int. Cl.³: **C 08 L 69/00**

(30) Priorität: 15.01.80 DE 3001204

(43) Veröffentlichungstag der Anmeldung:
22.07.81 Patentblatt 81/29

(84) Benannte Vertragsstaaten:
DE FR GB IT NL SE

(71) Anmelder: BAYER AG
Zentralbereich Patente, Marken und Lizenzen
D-5090 Leverkusen 1, Bayerwerk(DE)

(72) Erfinder: Hocker, Jürgen, Dr.
Eichenweg 6
D-5060 Bergisch Gladbach 2(DE)

(72) Erfinder: Dhein, Rolf, Dr.
Deswatinesstrasse 30
D-4150 Krefeld(DE)

(72) Erfinder: Cohnen, Wolfgang, Dr.
Heymannstrasse 36
D-5090 Leverkusen(DE)

(72) Erfinder: Müller, Peter-Rolf, Dr.
Paul-Klee-Strasse 76
D-5090 Leverkusen 1(DE)

(54) Elektrisch leitfähiges Polycarbonat.

(57) Antistatische und elektrisch leitfähige Formmasse aus 97 bis 99,99 Gew.-% eines aromatischen Polycarbonats und 3 bis 0,01 Gew.-% Kohlenstoff-oder Graphitfasern, deren Verhältnis von Länge zu Querschnitt mindestens 10 : 1 ist.

EP 0 032 379 A2

- 1 -                            0032379

BAYER AKTIENGESELLSCHAFT          5090 Leverkusen, Bayerwerk
                                  G-by

Zentralbereich
Patente, Marken und Lizenzen


## Elektrisch leitfähiges Polycarbonat

Gegenstand der Erfindung ist eine antistatische und
elektrisch leitfähige Formmasse aus 97 bis 99,99 Gew.-%
eines aromatischen Polycarbonats und 3 bis 0,01 Gew.-%
Kohlenstoff- oder Graphitfasern, deren Verhältnis von
Länge zu Querschnitt mindestens 10 : 1 ist. Das Verhältnis
Länge zu Querschnitt der Fasern ist bevorzugt 100 : 1 bis
1000 : 1. Die Massen können neben dem aromatischen Polycarbonat und der Kohlenstoff- oder Graphitfasern die für
thermoplastische Massen üblichen Zusätze wie Stabilisatoren, Füllstoffe, Pigmente enthalten.


Aromatische Polycarbonate im Sinne der Erfindung sind
insbesondere die Polycarbonate von Bisphenolen wie
Bisphenol A, Tetrachlor- oder Tetrabrombisphenol A,
Tetramethylbisphenol A, entsprechende Copolycarbonate
und solche,die durch Einkondensieren geringer Mengen
dreiwertiger Phenole vernetzt oder verzweigt sind. Es
handelt sich im allgemeinen um hochmolekulare Produkte,
die die Eigenschaften thermoplastischer Kunststoffe
haben.


Le A 20 076 - Europa

Es ist bekannt, Kunststoffe durch Zumischen von fein verteilten Metallen bzw. von Ruß antistatisch bzw. elektrisch leitfähig zu machen. Die Menge des zugesetzten elektrischen Leiters übersteigt dabei meist 20 Gew.-%, wenn ein ausreichender Effekt erzielt werden soll. Dabei verschlechtern sich die mechanischen Eigenschaften des Polymeren meist so, daß die Produkte für viele Anwendungen unbrauchbar werden. Man hat Kohlenstoff- oder Graphitfasern auch zur mechanischen Verstärkung von Kunststoffen verwendet (vgl. Japanische Patentanmeldung 50-001169). Auch hier braucht man aber Mengen von über 10 Gew.-%.

Der vorliegenden Erfindung liegt die Erkenntnis zugrunde, daß man die elektrische Leitfähigkeit von aromatischen Polycarbonaten erheblich, d.h., um mehrere Zehnerpotenzen steigern kann, wenn man das aromatische Polycarbonat mit Kohlenstoff- oder Graphitfasern, deren Verhältnis von Länge zu Querschnitt mindestens 10 : 1, vorzugsweise 100 :1 bis 1000 : 1 ist, möglichst homogen vermischt. Die Menge der Fasern ist im allgemeinen 0,01 bis 3 Gew.-%, bezogen auf das Gemisch. Für eine antistatische Ausrüstung genügen häufig Mengen von weniger als 1 Gew.-%, so daß Mengen von 1 bis 0,1 Gew.-% bevorzugt sind. Die erforderliche Menge ist auch abhängig von der geometrischen Gestalt der Fasern. Die erforderlichen Mengen werden umso kleiner, je länger und je dünner die Fasern sind. Die mechanischen Eigenschaften des aromatischen Polycarbonats werden durch den Zusatz der Kohlenstoff- bzw. Graphitfasern nicht verschlechtert, im Gegenteil, häufig werden bessere mechanische Werte erhalten.

Le A 20 076

- 3 -

Die Kohlenstoff-bzw. Graphitfasern können mit an sich bekannten Methoden in das Polycarbonat eingearbeitet werden. Es ist möglich, dies während der Polycarbonatherstellung oder danach zu tun. Einarbeitungsmethoden, die die Morphologie der Fasern nicht verändern, sind bevorzugt. Wird das Verhältnis Länge zu Querschnitt bei der Einarbeitung durch Brechen der Fasern verändert, dann muß evtl. die Fasermenge angepaßt werden. Die mit Fasern verstärkten aromatischen Polycarbonate können nach den üblichen Methoden der Thermoplastenverarbeitung weiterbehandelt werden, z.B. durch Spritzgußextrusion oder Blasverfahren, im allgemeinen liegen die Verarbeitungstemperaturen bei 275 bis 350°C. Bevorzugt ist die Herstellung von Kohlenstoff-Fasern enthaltenden Folien aus Lösungen der aromatischen Polycarbonate. Enthalten diese Folien die Kohlenstoff- bzw. Graphitfasern in Mengen von 0,1 bis etwa 1 Gew.-%, so erhält man hervorragende antistatische Eigenschaften bei hoher Transparenz. Ein Zusatz von Ruß in den gleichen Mengen hat praktisch dagegen keine Wirkung, vermindert jedoch die Transparenz erheblich.

Durch geeignete Verfahren können die Kohlenstoff- bzw. Graphitfasern im Polycarbonat auch in einer Vorzugsrichtung ausgerichtet werden. Man erhält dann Produkte, beispielsweise Formkörper oder Folien mit in einer vorgegebenen Richtung erhöhten Leitfähigkeit.

Die erfindungsgemäßen Formmassen können überall dort mit Vorteil verwendet werden, wo elektrostatische Aufladung unbedingt vermieden werden muß. Beispielsweise

Le A 20 076

im Bergbau unter Tage, um Explosionsgefahr zu vermeiden oder in elektrischen oder elektronischen Geräten, z.B. als Gehäuse für hochempfindliche MOS-Bausteine.

Le A 20 076

- 4 -

- 5 -

## Ausführungsbeispiele

Eine 20 gew.-%ige Lösung von Bisphenol A Polycarbonat (Molekulargewicht: 28 000 ) wurde mit den in der Tabelle angegebenen Mengen an Kohlenstoff oder Graphitfasern vermischt. Aus der erhaltenen Lösung wurden Folien mit einer Dicke von 0,01 bis 0,1 mm gegossen. Die Ergebnisse zeigt die folgende Tabelle 1.

Le A 20 076

T a b e l l e   1

| Bei-spiel Nr. | Gew.-% Fasern | durch-schnittl. Länge in mm | durch-schnittl. Durchmesser in $\mu$m | Elektrische Leitfähigkeit $\Omega^{-1}cm^{-1}$ | Elektrostatische* Aufladung Vcm $Vcm^{-1}$ |
|---|---|---|---|---|---|
| 1 | rein.PC | -- | -- | $< 10^{-18}$ | $> 5000$ |
| 2 | 1,0 | 3,0 | 12,5 | $10^{-5}$ | $< 100$ |
| 3 | 0,5 | 3,0 | 12,5 | $10^{-7}$ | $+200$ |
| 4 | 1,0 | 6,0 | 14,5 | $10^{-5}$ | $< 100$ |
| 5 | 0,5 | 6,0 | 14,5 | $10^{-5}$ | $< 100$ |
| 6 | 0,1 | 6,0 | 14,5 | $10^{-6}$ | $+300$ |
| 7 | 0,5 | 10,0 | 14,5 | $10^{-5}$ | $< 100$ |
| 8 | 0,1 | 25,0 | 14,5 | $10^{-5}$ | $< 100$ |
| 9 | 0,1 | 100,0 | 14,5 | $10^{-6}$ | $+200$ |
| 10 | 1,0 | 0,13 | 12,5 | $10^{-6}$ | -- |
| 11 | 0,05 | 0,13 | 12,5 | $10^{-9}$ | -- |
| 12 | 1,0 | 0,20 | 12,5 | $10^{-5}$ | -- |
| 13 | 0,1 | 0,20 | 12,5 | $10^{-7}$ | -- |
| 14 | 1,0 | 0,37 | 14,5 | $10^{-6}$ | -- |
| 15 | 0,05 | 0,37 | 14,5 | $10^{-7}$ | -- |
| 16 | 1,0 | 0,70 | 14,5 | $10^{-6}$ | -- |
| 17 | 0,1 | 0,70 | 14,5 | $10^{-8}$ | -- |

*) Reibungspartner: Dralon, 50 Reibungen. 23°C, 50 % relativer Feuchte.

Le A 20 076

- 6 -

0032379

Patentanspruch

Antistatische und elektrisch leitfähige Formmasse aus
97 bis 99,99 Gew.-% eines aromatischen Polycarbonats
und 3 bis 0,01 Gew.-% Kohlenstoff- oder Graphitfasern,
deren Verhältnis von Länge zu Querschnitt mindestens
10 zu 1 ist.

Le A 20 076